# EUROPÄISCHE PATENTSCHRIFT

(11) **EP 0 571 688 B1**
(45) Veröffentlichungstag und Bekanntmachung des Hinweises auf die Patenterteilung: **14.02.1996**
(21) Anmeldenummer: 92810394.4
(22) Anmeldetag: 26.05.1992
(51) Int. Cl.: B23K 26/10, B23K 37/04, B23Q 1/72, B23Q 5/00

(54) **Anlage zum Schneiden eines Werkstueckes**
Apparatus for cutting workpieces
Installation pour couper une pièce

(43) Veröffentlichungstag der Anmeldung: 01.12.1993
(73) Patentinhaber: Bystronic Laser AG, CH-3362 Niederönz (CH)
(72) Erfinder: Zumstein, Ernst, CH-3400 Burgdorf (CH)
(74) Vertreter: AMMANN PATENTANWAELTE AG BERN

(56) Entgegenhaltungen:
- EP-A- 0 327 895
- EP-A- 0 464 296
- PATENT ABSTRACTS OF JAPAN vol. 11, no. 149 (M-588)(2596) 15. Mai 1987

## Beschreibung

Die Vorliegende Erfindung betrifft eine Anlage zum Schneiden eines Werkstückes entsprechend dem Oberbegriff von Anspruch 1.

Solche Anlagen sind bekannt, beispielsweise aus der Schrift EP-A-0 464 296, und zwar insbesondere zum Schneiden von Flachmaterial mittels Laserstrahl. Bei dieser Anlage können schwenkbare Stützarme für das Flachmaterial entweder um einen kleinen Winkel verschwenkt werden, um dem Laserstrahl bei dessen Durchgang über einem Stützarm auszuweichen und damit Beschädigungen zu vermeiden, oder aber die Stützarme können vollständig heruntergeschwenkt werden, um ausgeschnittene Teile oder Restgitter auf ein Förderband herunterfallen zu lassen. Jedem Stützarm ist hierbei ein eigenes Antriebsorgan, z. B. ein pneumatischer Zylinder, zugeordnet.

Eine solche Ausführung der Schneidanlage ist aufwendig, und der Bedarf an Druckluft ist erheblich. Der Platzbedarf jedes einzelnen Antriebsaggregates für einen Stützarm erlaubt es nicht, den Abstand zwischen benachbarten Stützarmen unter eine gewisse Grenze zu verringern. Es kann auch Schwierigkeiten bereiten, den Lärm in Grenzen zu halten, besonders wenn alle Stützarme gleichzeitig abgesenkt werden.

Aus der Schrift EP-A-0 327 895 ist eine weitere Anlage der genannten Art bekannt. Bei dieser besteht der Rost zum Tragen des flachen Werkstückes aus einer erheblichen Anzahl hochkantig stehender, lamellenartiger und oben gezahnter Bleche. Jedes dieser Bleche wird einzeln durch eine Schraubenfeder von unten her in Position gehalten und kann durch Druck von oben um wenige Zentimeter abgesenkt werden. Hierzu dient eine mit der Werkstückbearbeitung gekoppelte Mechanik in Form eines Rades oder Gleitschuhs, die alle diejenigen Bleche absenkt, die jeweils momentan durch den Schneidstrahl beschädigt werden könnten.

Ausgehend von diesem Stand der Technik ist es die Aufgabe der Erfindung, eine einfache, robuste Einrichtung anzugeben, die es erlaubt, die genannten Stützarme bzw. die gezahnten Bleche jederzeit einzeln oder in beliebigen Gruppen aus ihrer tragenden Position abzusenken. Hierbei soll der energetische Aufwand und die Geräuschentwicklung gering sein.

Diese Aufgabe wird gemäss den kennzeichnenden Merkmalen des Anspruchs 1 gelöst. Die abhängigen Ansprüche geben Ausgestaltungen der Erfindung an. Die Zahl von eigentlichen Antriebsaggregaten, beispielsweise pneumatischen Zylindern, kann damit gegenüber der erstgenannten Schrift entscheidend herabgesetzt werden. Zum Kuppeln der Stützelemente mit ihrem Antriebsorgan genügen verhältnismässig kleine, schwache Betätigungsorgane, beispielsweise pneumatische Zylinder, die nur wenig Durckluft benötigen. Der geringe Platzbedarf der Kupplungsmittel und ihrer Antriebsaggregate gestattet weiter einen praktisch beliebig geringen gegenseitigen Abstand zwischen den jeweils benachbarten Stützelementen.

Die Erfindung wird nun anhand eines in der Zeichnung dargestellten Ausführungsbeispieles näher erläutert.
- Fig. 1: zeigt eine Seitenansicht der Anlage,
- Fig. 2: zeigt einen Querschnitt durch die Anlage, und
- Fig. 3: zeigt einen Teil-Querschnitt in grösserem Massstab.

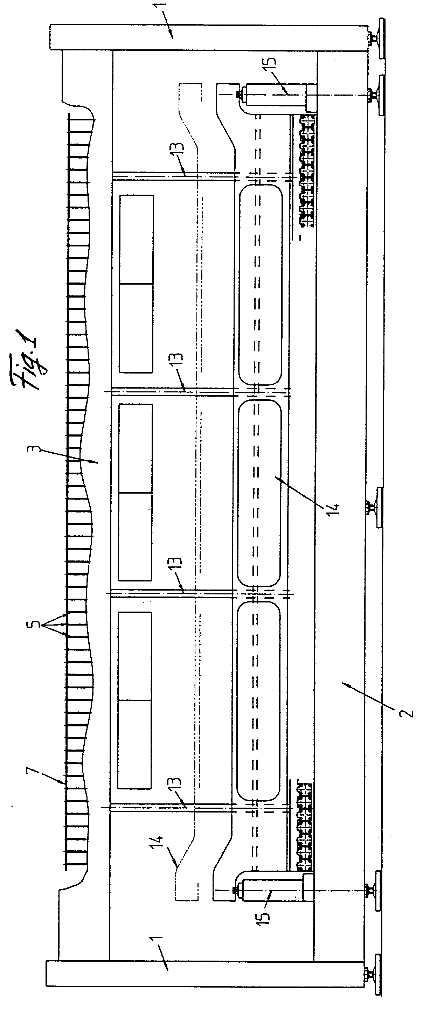

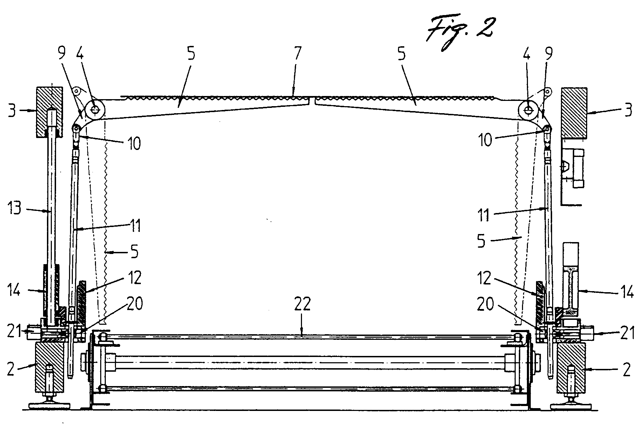

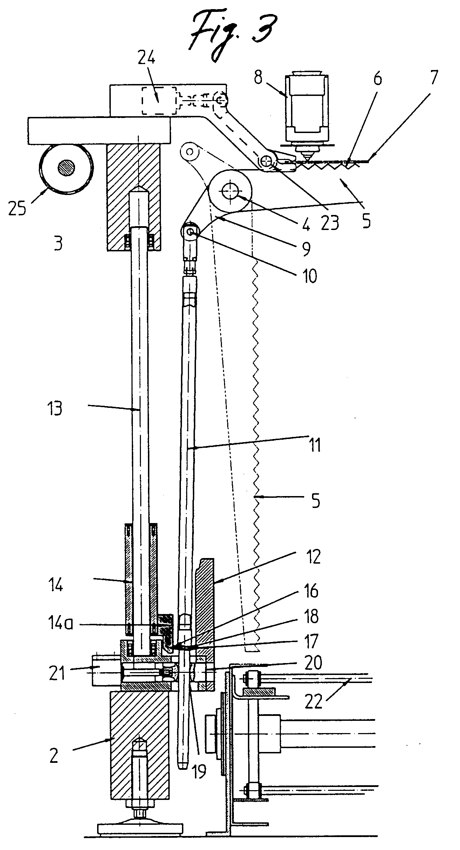

Die dargestellte Schneidanlage weist ein Gestell mit stirnseitigen Rahmen 1, beidseitig einem unteren Längsrahmen 2 und beidseitig einem oberen Längsrahmen 3 auf, wobei in Fig. 1 der obere Längsrahmen 3 teilweise weggeschnitten ist. Im oberen Teil des Gestelles sind beidseitig Längsachsen 4 angeordnet (Fig. 2), auf welchen annähernd bis in die Mitte reichende Stützarme 5 schwenkbar gelagert sind. Diese Stützarme weisen oben eine gezahnte Auflagefläche 6 auf, welche eine Platte 7 stützt, aus welcher mittels eines in Fig. 3 dargestellten Schneidkopfes, insbesondere Laser-Schneidkopfes 8, Teile herauszuschneiden sind. Der Schneidkopf 8 kann in nicht dargestellter, an sich bekannter Weise über die ganze Fläche der Platte 7 in beliebige Positionen verfahren werden, um Teile längs beliebiger Konturen auszuschneiden. Dank der Zahnung der Stützfläche 6 der Stützarme 5 ist eine Beschädigung dieser Stützfläche bzw. der Unterseite der Platte 7 durch den Laserstrahl unwahrscheinlich.

Mit jedem Stützarm 5 ist ein Hebel 9 verbunden, dessen freies Ende durch ein Gelenk 10 mit einer Steuerstange 11 verbunden ist. Jede Steuerstange 11 ragt unten zwischen einem fest mit dem Maschinengestell verbundenen Haltebalken 12 und einem vertikal beweglichen auf Stangen 13 geführten Antriebsbalken 14 hindurch. Der Antriebsbalken 14 kann mittels zweier seitlicher hydraulischer oder pneumatischer Zylinder 15 vertikal verschoben werden, und zwar aus der in den Fig. 1 und 2 ausgezogenen unteren Ruhestellung in eine obere strichpunktiert angedeutete Stellung 14'. Mit dem Antriebsbalken 14 ist eine Kupplungsleiste 14a verbunden, die mit einer Kupplungsnut 16 versehen ist. Der ortsfeste Haltebalken 12 ist mit einer entsprechenden Kupplungsnut 17 versehen. Ein nach beiden Seiten gerichteter Kupplungszahn 18 der Steuerstange 11 kann in die eine oder andere der Nuten 16 bzw. 17 eingreifen, womit die Stange 11 entweder mit dem Haltebalken 12 oder mit der Kupplungsleiste 14a gekuppelt wird. Zu diesem Zwecke ragt das untere Ende der Steuerstange 11 durch eine Querbohrung 19 eines Mitnehmers 20, welcher mittels eines pneumatischen Zylinders 21 hin und her verschoben werden kann, um den Kupplungszahn 18 entweder mit dem Haltebalken 12 oder mit der Kupplungsleiste 14a und indirekt mit dem Antriebsbalken 14 zu kuppeln.

Ein Förderband 22 dient der Entsorgung von ausgeschnittenen Teilen oder Restgittern in später beschriebener Weise.

Fig. 3 zeigt eine Zange 23, welche den Rand der Platte 7 festhält. Es sind mehrere derartige Zangen vorhanden, welche die Platte 7 während der Bearbeitung festhalten und zum Entsorgen des Restgitters freigeben. Ein Betätigungsaggregat 24 dient zum Oeffnen und Schliessen der Zange 23, während ein Antriebsaggregat 25 dazu dient, die Zange 23 zur Anpassung an verschiedene Plattenformate zu verschieben.

Die Arbeitsweise der dargestellten Anlage ergibt sich schon weitgehend aus der obenstehenden Beschreibung. Die Fig. 2 und 3 zeigen die Anlage in Betriebszustand mit den dargestellten Stützarmen 5 in horizontaler Stützstellung. Die Steuerstangen 11 sind nach innen verschoben und mit dem ortsfesten Haltebalken 12 gekuppelt. Damit sind die Steuerstangen 11 und die Stützarme 5 in der dargestellten Position verriegelt. Sie bleiben in dieser Stellung bis ein Teil aus der Platte 7 vollständig ausgeschnitten ist. Wenn es soweit ist, werden die den ausgeschnittenen Teil stützenden Arme 5 in die strichpunktiert angedeutete heruntergeschwenkte Position 5' heruntergeschwenkt, indem die zugeordneten Steuerstangen 11 mittels dar zugeordneten Zylinder 21 und Schieber 20 in Fig. 3 nach aussen bzw. nach links verschoben werden, wobei diese Steuerstangen vom Haltebalken 12 entkuppelt und mit der Kupplungsleiste 14a gekuppelt werden. Dann werden die Antriebszylinder 15 betätigt, um den Antriebsbalken 14 in seine obere Betriebsstellung (14') zu verschieben. Die mit der Kupplungsleiste 14a gekuppelten Steuerstangen 11 werden mit dieser Bewegung angehoben und verschwenken die damit verbundenen Stützarme 5 in die abgesenkte Position 5'. Der ausgeschnittene Teil fällt damit auf das Förderband 22 und wird wegtransportiert. Dann wird der Antriebsbalken 14 wieder abgesenkt, die damit gekuppelten Steuerstangen 11 bzw. Stützarme 5 werden in die Stützposition hochgeschwenkt und ein neuer Schneidvorgang kann ausgelöst werden, sofern nicht ohnehin der Schneidvorgang schon vorher in einem von Stützarmen 5 gestützten Teil der Platte 7 eingeleitet worden ist. Wenn in dieser Weise alle ausgeschnittenen Teile entsorgt sind, werden alle Stützarme 5 abgesenkt und alle Zangen 23 geöffnet und zurückgezogen, womit das Restgitter der Platte 7 auf das Förderband 22 herunterfällt und entsorgt werden kann. Dann werden die Stützarme 5 wieder angehoben, und es wird eine neue Platte 7 aufgelegt und von den Zangen 23 erfasst.

## Patentansprüche

1. Anlage zum Schneiden eines Werkstückes (7), insbesondere eines Flachmaterials,
mit einem Rost aus einer vielzahl von Stützelementen (5) zum Stützen des Werkstückes (7) und zum gesteuerten Entfernen desselben aus seiner Stützposition,
mit einer Antriebs- und Halteanordnung zum Halten der Stützelemente (5) in einer horizontalen Position, zum Absenken einer beliebigen Mehrzahl der Stützelemente (5) in eine Schräg- bzw. Vertikalposition und zum Wiederaufrichten der Stützelemente (5) in die horizontale Position,
dadurch gekennzeichnet,
- dass eine der Anzahl Stützelemente (5) entsprechende Anzahl von Steuerstangen (11) vorgesehen ist,
- dass jede der Steuerstangen (11) mit einem der um eine Achse (4) drehbar gelagerten Stützelemente (5) gekoppelt ist,
- dass jede Steuerstange (11) schwenkbar gelagert ist, und
- dass eine Verschwenkungs- und Auswahlanordnung vorgesehen ist, durch welche die Steuerstangen (11) einzeln entweder mit einem Halteorgan oder einem Antriebsorgan kraftschlüssig koppelbar sind, wobei sowohl das Halteorgan als auch das Antriebsorgan allen Steuerstangen (11) gemeinsam zugeordnet sind.

2. Anlage nach Anspruch 1,
dadurch gekennzeichnet,
- dass das Halteorgan einen quer zu den Steuerstangen (11) ausgerichteten, ortsfesten Haltebalken (12) umfasst,
- dass in Längsrichtung des Balkens (12) eine Kupplungsnut (17) angeordnet ist,
- dass an jeder Steuerstange (11) ein Kupplungszahn (18) angeordnet ist, und
- dass die Kupplungsnut (17) und die Kupplungszähne (18) so aufeinander abgestimmt sind, dass sie kraftschlüssig ineinander greifen können.

3. Anlage nach Anspruch 1,
dadurch gekennzeichnet,
- dass das Antriebsorgan einen quer zu den Steuerstangen (11) ausgerichteten quer zu seiner Längsrichtung hin- und herbeweglichen Antriebsbalken (14) umfasst,
- dass am Antriebsbalken (14) eine Kupplungsleiste (14a) mit einer Kupplungsnut (16) angeordnet ist,
- dass an jeder Steuerstange (11) ein Kupplungszahn (18) angeordnet ist, und
- dass die Kupplungsnut (16) und die Kupplungszähne (18) so aufeinander abgestimmt sind, dass sie kraftschlüssig ineinander greifen können.

4. Anlage nach den Ansprüchen 2 und 3,
dadurch gekennzeichnet,
- dass der Haltebalken (12) und der Antriebsbalken (14) parallel zueinander angeordnet sind,
- dass die Kupplungszähne (18) der Steuerstangen (11) im Zwischenraum zwischen dem Haltebalken (12) und dem Antriebsbalken liegen, und
- dass jeder Steuerstange (11) ein Kupplungsantrieb zugeordnet ist, der es erlaubt, bei einer vorgegebenen Kuppelstellung des Antriebsbalkens (14) die jeweilige Steuerstange (11) so zu verschwenken, dass ihr Kupplungszahn (18) entweder in die Kupplungsnut (17) des Haltebalkens (12) oder in die Kupplungsnut (16) des Antriebsbalkens (14) eingreift und bei jeder sonstigen Stellung des Antriebsbalkens (14) in der jeweiligen Nut (17, 16) gehalten wird.

5. Anlage nach Anspruch 4,
dadurch gekennzeichnet,
dass der Kupplungsantrieb als pneumatischer Zylinder (21) ausgebildet ist.

6. Anlage nach Anspruch 4,
dadurch gekennzeichnet,
dass der Kupplungsantrieb als Elektromagnet ausgebildet ist.

7. Anlage nach Anspruch 4,
dadurch gekennzeichnet,
dass die Steuerstangen (11) und die Stützelemente (5) so ausgebildet sind, dass die horizontale Position der Stützelemente (5) bei der Kuppelstellung und ansonsten die Schräg- bzw. Vertikalposition der Stützelemente (5) eingenommen wird.

## Claims

1. Installation for cutting a workpiece (7), more particularly flat stock,
comprising a grate consisting of a plurality of supporting elements (5) for the purpose of supporting said workpiece (7) and for the controlled removal of the latter from its supported position,
as well as a driving and holding device for the purpose of maintaining said supporting elements (5) in a horizontal position, lowering any desired number of supporting elements (5) to an inclined resp. vertical position, and returning the supporting elements (5) to the horizontal position,
characterised in that
- a number of control rods (11) corresponding to the number of supporting elements (5) are provided;
- each of said control rods (11) is coupled to one of the supporting elements which are rotatably journalled on an axle (4);
- each control rod (11) is pivotably journalled; and
- a pivoting and selecting device is provided by means of which the control rods (11) are capable of being positively coupled either to a holding member or to a driving member, both the holding member and the driving member being associated to all control rods (11) in common.

2. Installation according to claim 1, characterised in that
- the holding member comprises a stationary holding beam (12) extending transversally to the control rods (11);
- a coupling groove (17) is provided in the longitudinal direction of the beam (12);
- each control rod (11) is provided with a coupling tooth (18); and
- said coupling groove (17) and said coupling teeth (18) are adapted to each other in such a manner that they can positively engage in each other.

3. Installation according to claim 1, characterised in that
- the driving member comprises a driving beam (14) extending transversally to the control rods (11) and capable of reciprocating perpendicularly to its longitudinal direction;
- a coupling ledge (14a) having a coupling groove (16) is provided on the driving beam (14);
- each control rod (11) is provided with a coupling tooth (18); and
- said coupling groove (16) and said coupling teeth (18) are adapted to each other in such a manner that they can positively engage in each other.

4. Installation according to claims 2 and 3, characterised in that
- said holding beam (12) and said driving beam (14) are disposed in parallel to each other;
- said coupling teeth (18) of the control rods (11) are disposed in the space between the holding beam (12) and the driving beam; and
- each control rod (11) has an associated coupling drive allowing in a defined coupling position of the driving beam (14) to pivot the concerned control rod (11) in such a manner that its coupling tooth (18) engages either in the coupling groove (17) of the holding beam (12) or in the coupling groove (16) of the driving beam (14) and is held in the respective groove (17, 16) in any other position of the driving beam (14).

5. Installation according to claim 4, characterised in that said coupling drive is in the form of a pneumatic cylinder (21).

6. Installation according to claim 4, characterised in that said coupling drive is in the form of an electromagnet.

7. Installation according to claim 4, characterised in that the control rods (11) and the supporting elements (5) are so designed that the horizontal position of the supporting elements (5) is assumed in the coupling position and otherwise the inclined resp. vertical position of the supporting elements (5).

## Revendications

1. Installation pour découper une pièce à usiner (7), plus particulièrement des plats,
comprenant une grille consistant d'une pluralité d'éléments de soutien (5) servant à soutenir la pièce à usiner (7) et à enlever de manière contrôlée cette dernière de sa position de soutien,
ainsi qu'un dispositif d'entraînement et de maintien pour maintenir les éléments de soutien (5) dans une position horizontale, pour abaisser tout nombre désiré d'éléments de soutien (5) à une position inclinée resp. verticale et pour redresser les éléments de soutien (5) dans la position horizontale,
caractérisée en ce que
- un nombre de tiges de commande (11) correspondant au nombre d'éléments de soutien (5) sont prévues,
- chaque tige de commande (11) est accouplée à un des éléments de soutien (5), ces derniers tournant sur un arbre (4),
- chaque tige de commande (11) est logée de manière basculante, et que
- un dispositif de basculement et de sélection est prévu par l'intermédiaire duquel les tiges de commande (11) sont capables d'être commandées individuellement par accouplement à un membre de maintien ou un membre d'entraînement, ledit membre de maintien et ledit membre d'entraînement étant chaque fois associés à toutes les tiges de commande (11) en commun.

2. Installation selon la revendication 1, caractérisée en ce que
- le membre de maintien comprend une barre de maintien (12) stationnaire transversale aux tiges de commande (11),
- une rainure d accouplement (17) est disposée en direction longitudinale de la barre (12),
- chaque tige de commande (11) comporte un ergot d'accouplement (18), et que
- la rainure d'accouplement (17) et les ergots d'accouplement (18) sont adaptés l'une à l'autre de manière à permettre un engagement mécanique.

3. Installation selon la revendication 1, caractérisée en ce que
- le membre d'entraînement comprend une barre d'entraînement (14) transversale aux tiges de commande (11) et capable d'un mouvement alternatif perpendiculaire à sa direction longitudinale,
- une bande d'accouplement (14a) conportant une rainure d'accouplement (16) est disposée sur la barre d'entraînement,
- chaque tige de commande (11) comporte un ergot d'accouplement (18), et que
- la rainure d'accouplement (16) et les ergots d'accouplement (18) sont adaptés l'une à l'autre de manière à permettre un engagement mécanique.

4. Installation selon les revendications 2 et 3, caractérisée en ce que
- la barre de maintien (12) et la barre d'entraînement sont disposées en parallèle,
- les ergots d'accouplement (18) des tiges de commande se trouvent dans l'espace entre la barre de maintien (12) et la barre d'entraînement, et que
- à chaque tige de commande (11) est associé une commande d'accouplement permettant de basculer, dans une position définie de la barre d'entraînement (14), la tige de commande concernée (11) de telle manière que son ergot d'accouplement (18) s'engage soit dans la rainure d'accouplement (17) de la barre de maintien (12) ou dans la rainure d'accouplement (16) de la barre d'entraînement (14), et de le maintenir dans la rainure concernée (17, 16) dans toute autre position de la barre d'entraînement (14).

5. Installation selon la revendication 4, caractérisée en ce que la commande d'accouplement est en forme d'un cylindre pneumatique (21).

6. Installation selon la revendication 4, caractérisée en ce que la commande d'accouplement est en forme d'un électro-aimant.

7. Installation selon la revendication 4, caractérisée en ce que les tiges de commande (11) et les éléments de soutien (5) sont conformés de telle manière que la position horizontale des éléments de soutien (5) est assumée en position d'accouplement et autrement la position inclinée resp. verticale des éléments de soutien (5).
